# EUROPEAN PATENT SPECIFICATION

(11) **EP 2 520 427 B1**
(45) Date of publication and mention of the grant of the patent: **28.08.2013**
(21) Application number: 12165096.4
(22) Date of filing: 23.04.2012
(51) Int. Cl.: B32B 27/00, B32B 27/36, B32B 7/04, B32B 3/12, B32B 3/30, E04C 2/54, E04D 3/28

(54) **Covering system, in particular for verandas**
Abdecksystem, insbesondere für Veranda
Système de recouvrement, en particulier pour vérandas

(30) Priority: 05.05.2011 IT MI20110763
(43) Date of publication of application: 07.11.2012
(73) Proprietor: Koscon Industrial SA, 6855 Stabio (CH)
(72) Inventor: Conterno, Cosimo, 6850 MENDRISIO (CH)
(74) Representative: Giuli, Maurizio Mario Galdino

(56) References cited:
- EP-A1- 0 576 062
- WO-A1-2004/106662
- FR-A1- 2 828 509
- GB-A- 2 464 331
- US-A1- 2005 048 231
- DATABASE WPI Week 200006 Thomson Scientific, London, GB; AN 2000-067671 XP002663764, & JP 11 320797 A (KOMATSU SEISAKUSHO KK) 24 November 1999 (1999-11-24)

## Description

The present invention relates to a covering system, in particular for verandas.

At present, a polycarbonate panel having a considerable thickness, from about 32 to about 40 mm, or a pre-insulated panel in plate and polyurethane foam, are used as covering for verandas.

Both solutions currently proposed and available on the market, however, have various drawbacks.

Polycarbonate, in fact, on the one hand guarantees a high passage of light and a good thermal insulation, but has low performances on a sound level.

These low performances on a sound level unfortunately relate to both sound insulation in general, and the generation and propagation of noise generated by the falling of rain on the same cover.

In a complementary way, a panel in plate and polyurethane offers good performances of sound absorbance but, due to its nature, does not allow the passage of light.

US 2005/048231 discloses a multilayered covering assembly comprising an alveolar polycarbonate panel, a massive polycarbonate panel and a layer of an adhesive for connecting the panels. The adhesive used can be for example EVA.

WO 2004/106662 shows covering panels able to reduce the rainfall noise by providing projections on the upper surface.

GB 2 464 331 discloses a multilayered covering assembly made of two hollow cellular polycarbonate panels connected together via a perimeter spacer.

An objective of the present invention is to provide a covering system, particularly for verandas, capable of solving the above drawbacks of the known art, in an extremely simple, economical and particularly functional manner.

A further objective is to provide a covering system, in particular for verandas, having high thermal and sound performances and which, at the same time, allows an adequate passage of light.

These objectives, according to the present invention, are achieved by providing a covering system, in particular for verandas, as specified in claim 1.

Further characteristics of the invention are indicated in the dependent claims.

The characteristics and advantages of a covering system, in particular for verandas, according to the present invention will appear more evident from the following illustrative and non-limiting description, referring to the schematic drawings enclosed, in which:
- figure 1 is a view of a first example of a covering system, in particular for verandas, according to the present invention;

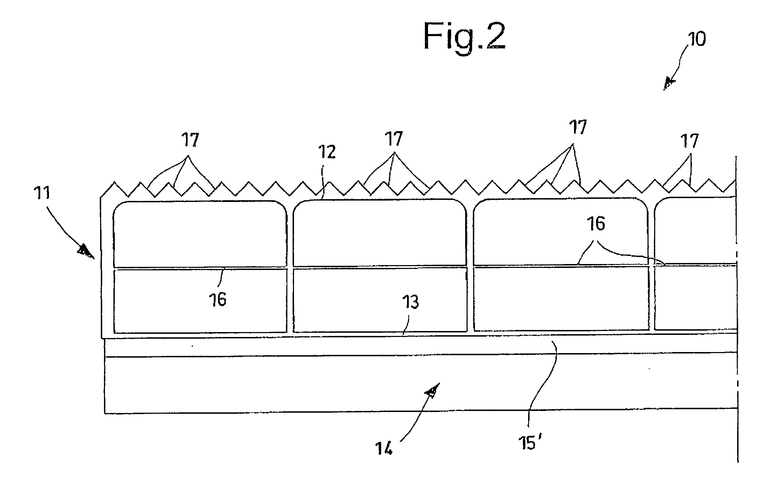

- figure 2 shows an example of a covering system, in particular for verandas;

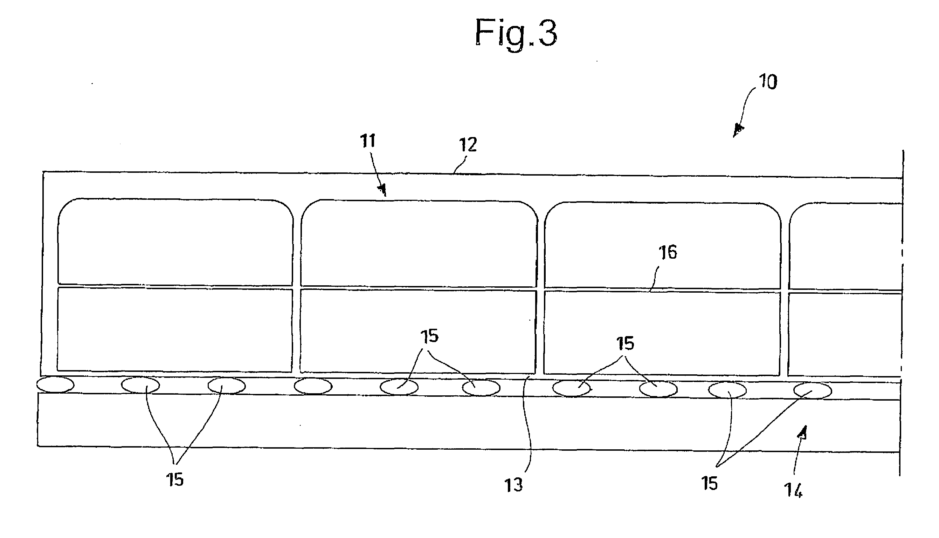

- figure 3 shows a further covering system, in particular for verandas; and
- figure 4 shows a second covering system, in particular for verandas, according to the present - invention.

With reference to the figures, an embodiment of a covering system, in particular for verandas, according to the present invention, is indicated with 10.

This covering system 10 is of the multilayer structure type and comprises an external panel 11, an internal panel 14 and connection means 15,15' interposed between the panels 11 and 14.

In particular, the external panel 11 is of the multi-alveolar type and is provided with an upper wall 12, exposed to atmospheric agents, a lower wall 13 facing the interior of the system 10.

In the embodiment shown, the external panel 11 comprises at least one inner intermediate wall 16 parallel to the upper wall 12 and lower wall 13 and connected to them by means of substantially orthogonal septa.

All other possible geometries of the alveolar type inside the panel 11 are obviously also included in the present invention.

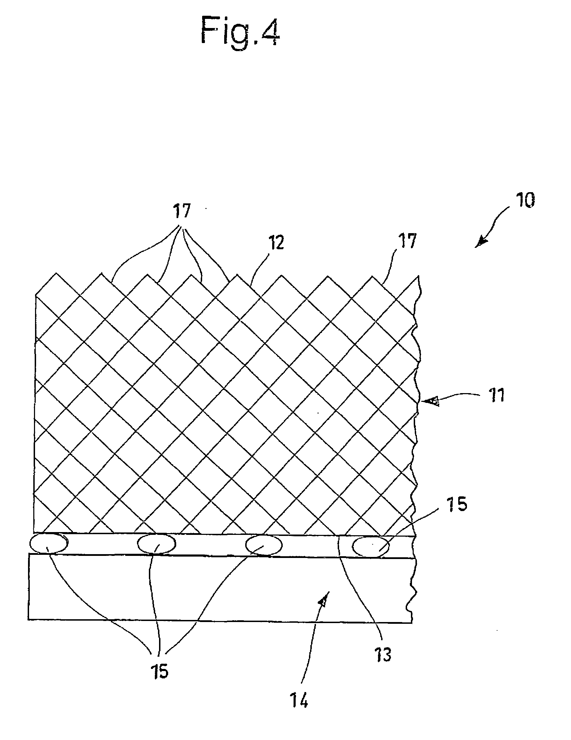

Figure 4 shows an embodiment of the external panel 11 in which the alveolar structure is composed of polygonal elements.

With respect to the profile of the external surface of the upper wall 12, the same can be tilted on one side to allow the side drainage of rainwater, or produced according to other geometries.

In order to achieve an additional technical effect, the external surface of the upper wall 12 consists of a plurality of flanked protruding elements 17, which define a surface geometry composed of parallel ridges and grooves.

According to two different embodiment examples, said protruding elements 17 can produce actual channels with a triangular section for conveying rainwater and, in this case, the grooves are slightly tilted for conveying said water when desired, or they can be a series of independent protruding elements 17.

This particular conformation of the external panel 11 offers a double advantage.

On the one hand, the protruding elements 17 reduce the noise generated by the falling of rain on the same cover, as they cause a kind of "breakage" of the single drops, and on the other hand, the alveolar structure provides a high thermal insulation.

As previously mentioned, the system 10 also includes an inner panel 14 of the compact sheet type.

Said inner panel 14 of the compact sheet type in turn offers a double advantage, i.e. on the one hand it guarantees a high sound insulation and on the other, it provides the possibility of varying the internal aesthetical finishing of the ensemble, at the same time maintaining its transparency, to better adapt it to all possible environments.

Both panels are transparent and made of polycarbonate in order to guarantee the passage of light.

Finally, with respect to the connection means 15, 15' of the panels 11,14, the latter have a suitable elastic modulus and thickness for producing a further amortizing element suitable for sound insulation.

In particular, the term suitable means that these connection means 15, 15' are capable of becoming elastically deformed under the action of sound waves transmitted from the outside through the alveolar polycarbonate sheets, thus acting as shock-absorber and dissipator of sound energy, causing a sound cut and significantly participating in the insulation, this deformation in bad weather, such as rain, snow or hail, amortizes both the impact, in particular in the case of rain or hail, and the weight that can be accumulated, in particular in the case of snow.

To allow the whole system to be long-lasting with time, the outer surface of the upper wall 12, consisting of a plurality of protruding elements 17, must be covered with an anti-yellowing layer of transparent material. This anti-yellowing layer of transparent material can be advantageously co-extruded with the outer panel 11, thus optimizing the production costs of the system.

The connection means 15,15' of the panels 11,14, can be an element selected from an adhesive, an EVA-based sheath, a polyolefin-based sheath or an acrylic-elastomer-based sheath.

As shown in

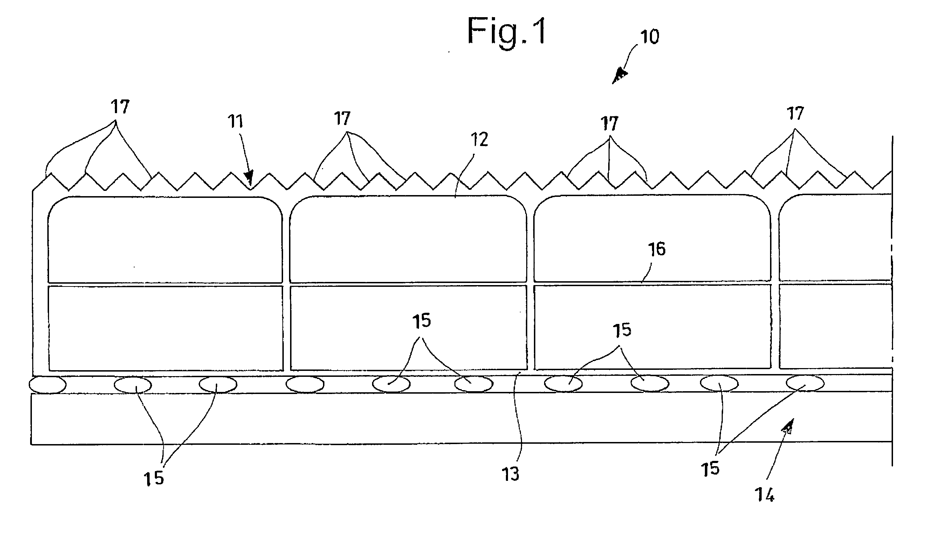

figure 1, the connection means 15,15' may be distributed between the panels 11,14 in the form of curbs 15 separate from each other.

In this embodiment, seats are advantageously produced between the panels 11 and 14, adapted for housing decorative elements of the ensemble or illuminating elements of the LED type.

The provision of curbs 15 having much smaller dimensions than the interspaces existing between one curb 15 and the subsequent curb, preferably creates a further thermal and sound insulation space, in addition to a series of differentiated housings, separate ;from each other, for providing all types of auxiliary elements.

The following are thus obtained:
- the creation of a further heat and sound insulation chamber;
- the possibility of inserting decorative elements, led lights, auxiliary elements in general;
- seats for allowing the drainage and canalization of water as a result of condensation, and
- the series of curbs having a certain thickness allows the double function of a connection between the parts and differentiated amortizing elements.

It can thus be seen that a covering system, in particular for verandas, according to the present invention, achieves the objectives mentioned above.

The covering system according to the present invention, in fact, contemporaneously offers:
- high thermal performances;
- high acoustic performances, also minimizing noise due to rain;
- an adequate passage of light;
- an ample aesthetical variety by personalizing the inner panel.

In particular, these characteristics are achieved by the synergic combination of the protruding elements for the reduction of noise due to rain, the alveolar structure for heat insulation and the lower compact sheet for sound insulation.

Furthermore, as already mentioned, the connection means in the form of curbs offers the possibility of arranging decorative or illuminating elements directly inside the system, allowing the whole ensemble to be aesthetically modified according to requirements.

The covering system, in particular for verandas, of the present invention thus conceived, can undergo numerous modifications and variations, all included in the same inventive concept; furthermore, all the details can be substituted by technically equivalent elements. In practice, the materials used, as also the dimensions, can vary according to technical requirements.

## Claims

1. A covering system (10) of the multilayer structure type, comprising an external panel (11), an inner panel (14) and connection means (15) positioned between said panels (11,14), said external panel (11) being of the multi-alveolar type and provided with an upper wall (12), exposed to atmospheric agents, a lower wall (13) facing inwards with respect to said system (10), said inner panel (14) being of the compact sheet type, said panels (11,14) being transparent and made of polycarbonate, **characterized in that** said external surface of said upper wall (12) consists of a plurality of flanked protruding elements (17) which define a geometrical surface composed of parallel ridges and grooves and said connection means (15,15') interposed between said panels (11,14) are of the discontinuous type and are of the elastically deformable type, under the action of acoustic waves and elements to which said system (10) is subjected.

2. The covering system (10) according to claim 1, **characterized in that** said protruding elements (17) have a triangular section.

3. The covering system (10) according to claim 2, **characterized in that** said protruding elements (17) have a development transversal to the outer panel (11) said grooves having a controlled inclination for conveying rainwater.

4. The covering system (10) according to any of the previous claims, **characterized in that** said inner transparent panel (14) is coloured.

5. The covering system (10) according to any of the previous claims, **characterized in that** said external surface of said upper wall (12) consisting of a plurality of protruding elements (17) is covered by a layer of transparent anti-yellowing material coextruded with said external panel (11).

6. The covering system (10) according to any of the previous claims, **characterized in that** said connection means (15,15') are elements selected from an adhesive, an EVA-based sheath, a polyolefin-based sheath or an acrylic-elastomer-based sheath.

7. The covering system (10) according to any of the previous claims, **characterized in that** said connection means (15,15') are distributed between said panels (11,14) in the form of curbs (15) separate from each other.

8. The covering system (10) according to claim 7, **characterized in that** it comprises illuminating elements situated between said curbs (15).

## Patentansprüche

1. Belagsystem (10) vom Typ mit mehrlagigem Aufbau, mit einer Außentafel (11), einer Innentafel (14) und einem Verbindungsmittel (15), das zwischen den Tafeln (11, 14) positioniert ist, wobei die Außentafel (11) vom Mehrfachwabentyp und mit einer oberen Wand (12), die atmosphärischen Mitteln ausgesetzt ist, und einer unteren Wand (13), die einwärts in Bezug auf das System (10) weist, versehen ist, wobei die Innentafel (14) vom Kompaktschichttyp ist, wobei die Tafeln (11, 14) transparent sind und aus Polycarbonat bestehen,
**dadurch gekennzeichnet, dass**
die Außenfläche der oberen Wand (12) aus einer Mehrzahl von geflankten vorragenden Elementen (17) besteht, die eine geometrische Oberfläche definieren, die aus parallelen Rippen und Nuten besteht, und das Verbindungsmittel (15, 15'), das zwischen den Tafeln (11, 14) angeordnet ist, vom diskontinuierlichen Typ ist und unter der Wirkung von Schallwellen und Elementen, denen das System ausgesetzt ist, vom elastisch verformbaren Typ ist.

2. Belagsystem (10) nach Anspruch 1,
**dadurch gekennzeichnet, dass**
die vorragenden Elemente (17) einen Dreieckquerschnitt besitzen.

3. Belagsystem (10) nach Anspruch 2,
**dadurch gekennzeichnet, dass**
die vorragenden Elemente (17) eine Entwicklung quer zu der Außentafel (11) besitzen, wobei die Nuten eine gesteuerte Schrägstellung zum Fördern von Regenwasser besitzen.

4. Belagsystem (10) nach einem der vorhergehenden Ansprüche,
**dadurch gekennzeichnet, dass**
die innere transparente Tafel (14) gefärbt ist.

5. Belagsystem (10) nach einem der vorhergehenden Ansprüche,
**dadurch gekennzeichnet, dass**
die Außenfläche der oberen Wand (12), die aus einer Mehrzahl vorragender Elemente (17) besteht, durch eine Lage aus transparentem nicht vergilbendem Material bedeckt ist, das mit der äußeren Tafel (11) koextrudiert ist.

6. Belagsystem (10) nach einem der vorhergehenden Ansprüche,
**dadurch gekennzeichnet, dass**
das Verbindungsmittel (15, 15') Elemente darstellt, die aus einem Klebstoff, einer auf EVA basierenden Umhüllung, einer auf Polyolefin basierenden Umhüllung oder einer auf Acrylelastomer basierenden Umhüllung gewählt sind.

7. Belagsystem (10) nach einem der vorhergehenden Ansprüche,
**dadurch gekennzeichnet, dass**
das Verbindungsmittel (15, 15') zwischen den Tafeln (11, 14) in der Form von Bordsteinen (15) verteilt ist, die voneinander getrennt sind.

8. Belagsystem (10) nach Anspruch 7,
**dadurch gekennzeichnet, dass**
es Beleuchtungselemente umfasst, die zwischen den Bordsteinen (15) angeordnet sind.

## Revendications

1. Système de couverture (10) du type structure multicouche, comprenant un panneau extérieur (11), un panneau intérieur (14) et des moyens de connexion (15) positionnés entre lesdits panneaux (11, 14), ledit panneau extérieur (11) étant du type multi-alvéolaire et pourvu d'une paroi supérieure (12), exposée à des agents atmosphériques, d'une paroi inférieure (13) tournée vers l'intérieur par rapport audit système (10), ledit panneau intérieur (14) étant du type feuille compacte, lesdits panneaux (11, 14) étant transparents et étant faits de polycarbonate, **caractérisé en ce que** ladite surface extérieure de la paroi supérieure (12) consiste en une pluralité d'éléments saillants flanqués (17) qui définissent une surface géométrique composée d'arêtes et de rainures parallèles et lesdits moyens de connexion (15, 15') intercalés entre lesdits panneaux (11, 14) sont du type discontinu et sont du type déformable élastiquement, sous l'action d'ondes acoustiques et d'éléments auxquels est soumis ledit système (10).

2. Système de couverture (10) selon la revendication 1, **caractérisé en ce que** lesdits éléments saillants (17) sont de section triangulaire.

3. Système de couverture (10) selon la revendication 2, **caractérisé en ce que** lesdits éléments saillants (17) ont un développement transversal au panneau extérieur (11), lesdites rainures ayant une inclinaison contrôlée pour acheminer les eaux de pluie.

4. Système de couverture (10) selon l'une quelconque des revendications précédentes, **caractérisé en ce que** ledit panneau transparent intérieur (14) est coloré.

5. Système de couverture (10) selon l'une quelconque des revendications précédentes, **caractérisé en ce que** ladite surface extérieure de la paroi supérieure (12) consistant en une pluralité d'éléments saillants (17) est recouverte d'une couche de matériau anti jaunissement transparente coextrudée avec ledit panneau extérieur (11),

6. Système de couverture (10) selon l'une quelconque des revendications précédentes, **caractérisé en ce que** lesdits moyens de connexion (15, 15') sont des éléments sélectionnés parmi un adhésif, une gaine à base d'EVA, une gaine à base de polyoléfine et une gaine à base d'élastomère acrylique.

7. Système de couverture (10) selon l'une quelconque des revendications précédentes, **caractérisé en ce que** lesdits moyens de connexion (15, 15') sont répartis entre lesdits panneaux (11, 14) sous la forme de bordures (15) séparées les unes des autres.

8. Système de couverture (10) selon la revendication 7, **caractérisé en ce qu'**il comprend des éléments d'éclairage situés entre lesdites bordures (15).
